(19) **Europäisches Patentamt / European Patent Office / Office européen des brevets**

(11) **EP 2 327 218 B1**

(12) **FASCICULE DE BREVET EUROPEEN**

(45) Date de publication et mention
de la délivrance du brevet:
**18.07.2012 Bulletin 2012/29**

(21) Numéro de dépôt: **09741375.1**

(22) Date de dépôt: **04.09.2009**

(51) Int Cl.:
***H04N 7/26*** (2006.01)

(86) Numéro de dépôt international:
**PCT/FR2009/051678**

(87) Numéro de publication internationale:
**WO 2010/026351 (11.03.2010 Gazette 2010/10)**

(54) **PROCÉDÉ DE TRANSCODAGE ENTROPIQUE D'UN PREMIER TRAIN DE DONNÉES BINAIRES EN UN SECOND TRAIN DE DONNÉES BINAIRES COMPRESSÉ, PROGRAMME D'ORDINATEUR ET DISPOSITIF DE CAPTURE D'IMAGES CORRESPONDANTS**

VERFAHREN ZUM ENTROPISCHEN TRANSKODIEREN EINES ERSTEN BINÄRDATENSTROMS ZU EINEM ZWEITEN KOMPRIMIERTEN BINÄRDATENSTROM UND ENTSPRECHENDES COMPUTERPROGRAMM UND BILDAUFZEICHNUNGSGERÄT

METHOD FOR ENTROPICALLY TRANSCODING A FIRST BINARY DATA STREAM INTO A SECOND COMPRESSED BINARY DATA STREAM, AND CORRESPONDING COMPUTER PROGRAM AND IMAGE RECORDING DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.09.2008 FR 0804893**

(43) Date de publication de la demande:
**01.06.2011 Bulletin 2011/22**

(73) Titulaire: **COMMISSARIAT A L'ENERGIE ATOMIQUE ET AUX ENERGIES ALTERNATIVES**
**75015 Paris (FR)**

(72) Inventeur: **ALACOQUE, Laurent**
**F-38340 Voreppe (FR)**

(74) Mandataire: **Bonnet, Michel et al**
**Cabinet Bonnet**
**93, Rue Réaumur - Boîte 10**
**75002 Paris (FR)**

(56) Documents cités:
| | |
|---|---|
| **EP-A- 1 437 896** | **WO-A-2006/046334** |
| **WO-A-2007/039795** | **GB-A- 2 360 915** |
| **US-A1- 2007 053 598** | **US-A1- 2007 071 090** |
| **US-B1- 6 477 280** | |

## Description

La présente invention concerne un procédé de transcodage entropique d'un premier train de données binaires en un second train de données binaires compressé par utilisation d'un code entropique prédéterminé à longueur variable des mots codés pour transcoder chaque mot du premier train de données binaires en un mot transcodé. Elle concerne également un procédé de codage par blocs mettant en oeuvre un tel procédé de transcodage. Enfin, Elle concerne également un programme d'ordinateur comprenant des instructions de code de programme et un dispositif de capture d'images conçus pour l'exécution des étapes d'un tel procédé de transcodage.

L'objectif de l'utilisation d'un code entropique est de transcoder des coefficients codés sous la forme de mots binaires de taille fixe à probabilités variables en mots binaires de tailles variables : de façon prédéterminée par le code entropique, les valeurs de coefficients les plus probables sont codées sur un nombre de bits faible ; au contraire, les valeurs de coefficients les moins probables sont codées sur un nombre de bits important.

L'utilisation d'un code entropique en compression de données est particulièrement adaptée aux signaux dont les propriétés statistiques sont prévisibles.

C'est en particulier le cas des signaux d'image, de vidéo et audio, dans lesquels la redondance spatiale et/ou temporelle est forte. Ainsi, statistiquement, les signaux résultant de la différence d'échantillons corrélés du monde réel comme par exemple la différence entre les échantillons successifs d'un signal d'image, de vidéo ou audio, fournissent des coefficients fréquemment proches de zéro et d'autant plus rares qu'ils s'éloignent de zéro en valeur absolue.

Les coefficients issus d'un codage de décorrélation par blocs de type DCT (de l'Anglais « Discrete Cosine Transform ») ou par décomposition dans une base d'ondelettes d'une image ou d'une séquence d'images numériques vérifient en général cette propriété.

Le codage par DCT, utilisé dans les standards JPEG et MPEG, est en général appliqué à des blocs carrés de 8x8 pixels et est alors envisagé comme une décomposition bidimensionnelle de chacun de ces blocs dans une base de 64 fonctions sinusoïdales discrètes à support infini. Le noyau unidimensionnel des projections verticale et horizontale réalisées par cette technique de codage est une fonction cosinus discrète sur 8 pixels. Ainsi, par ce codage DCT, le signal image est décomposé dans l'espace des fréquences.

Le codage par décomposition dans une base d'ondelettes à support fini, utilisé dans le standard JPEG 2000 est aussi généralement appliqué à des blocs carrés de 8x8 pixels. Un noyau unidimensionnel de projections verticale et horizontale couramment utilisé est un noyau de Haar à 2 pixels (i.e. la fonction mère créneau de Haar classique). Par application de ce noyau horizontalement et verticalement, on réalise une première décomposition d'un bloc 8x8 en quatre sous-blocs 4x4. Puis à un deuxième ordre, le sous-bloc 4x4 des basses fréquences est décomposé en quatre sous-blocs 2x2. Enfin à un troisième ordre, le sous-bloc 2x2 des basses fréquences est décomposé en quatre pixels dont un représentant la composante continue du bloc.

D'autres principes de décomposition, par exemple en sous-bandes fréquentielles, sont également envisageables. Ces codages ont tous pour objectif de décorréler l'image ou la séquence d'images initiales.

Par conséquent, les signaux issus d'un codage de ce type, disponibles sous forme de trains de données binaires constitués d'une succession de mots, chaque mot comportant un bit de signe et un nombre prédéterminé constant de bits pour définir la valeur d'un coefficient correspondant, vérifient cette statistique selon laquelle plus la valeur d'un coefficient est élevée, moins ce coefficient est probable.

Tout type de code entropique prédéfini qui attribue un nombre de bits d'autant plus faible que la valeur du mot binaire à transcoder est proche de zéro est donc particulièrement adapté à ces signaux. Bien sûr, l'utilisation d'un code entropique sera d'autant plus efficace que les statistiques du train de données binaires sur lesquelles il est appliqué sont proches du modèle statistique sur lequel le code entropique a été conçu.

Il existe à cet effet un grand nombre de codes entropiques différents plus ou moins efficaces selon le principe de décorrélation utilisé, de sorte que le choix d'un code entropique pour effectuer un transcodage est généralement dépendant de la façon dont le signal initial d'image, de vidéo ou audio a été au préalable décorrélé.

Cependant, même si un code entropique est sélectionné pour son adéquation particulière avec un procédé de codage de décorrélation donné, son efficacité peut également varier avec la nature même du signal initial. En effet, un tel code entropique a du mal à s'accommoder de la véritable variabilité des statistiques issues des signaux réels tels que des images, des vidéos ou des sons réels, notamment à cause du bruit présent sur les bits de poids faibles des coefficients obtenus de signaux réels non traités. Ce bruit freine la décroissance statistique des probabilités des coefficients codés en fonction de leur valeur absolue croissante : il atténue donc le potentiel de compression du code entropique.

Le brevet publié GB 2360915 divulgue une méthode telle que décrite ci-dessus.

Il peut ainsi être souhaité de prévoir un procédé de transcodage qui permette de s'affranchir des problèmes et contraintes précités.

L'invention est définie par les revendications ci-jointes.

L'invention sera mieux comprise à l'aide de la description qui va suivre, donnée uniquement à titre d'exemple et faite en se référant aux dessins annexés dans lesquels :

- la figure 1 illustre les étapes successives d'un procédé de transcodage selon un mode de réalisation de l'invention,
- la figure 2 illustre un exemple d'implantation du procédé de la figure 1 à l'aide de registres à décalages,
- la figure 3 représente schématiquement la structure générale d'un module optique de capteur d'images selon un mode de réalisation de l'invention,
- la figure 4 illustre les étapes successives d'un procédé de codage par blocs pouvant être mis en oeuvre dans le module optique de la figure 3,
- la figure 5 illustre un exemple d'implantation du procédé de la figure 4 à l'aide d'additionneurs et de soustracteurs,

Selon un premier aspect de l'invention, un nouveau procédé de transcodage entropique est tout d'abord proposé. Conformément à un mode de réalisation de l'invention, il utilise un code entropique particulièrement adapté à des trains de données binaires issus d'un codage de décorrélation d'images par blocs. Il peut donc être mis en oeuvre par un codeur réalisant une telle décorrélation, éventuellement suivie d'une quantification, puis du transcodage entropique lui-même. Ce codeur peut être implanté à différents endroits d'un dispositif de capture d'images.

Selon un second aspect de l'invention, un codage de décorrélation d'images par blocs, avantageusement réalisé avant le transcodage précité, est également proposé.

Premier aspect : transcodage entropique de paramètres issus d'un codage de décorrélation d'un signal d'image, de vidéo ou audio réel initial

A partir d'un signal réel initial, notamment un signal d'image, un codage de décorrélation est appliqué pour en exploiter les redondances et obtenir un train de données binaires constitué de mots définissant des paramètres aux propriétés statistiques très prévisibles.

De façon classique, ce train de données binaires est constitué d'une succession de mots, chaque mot comportant un bit de signe et un nombre prédéterminé constant de bits pour définir la valeur d'un coefficient correspondant. Comme indiqué précédemment, par l'effet de la décorrélation, la valeur d'un coefficient est d'autant plus probable qu'elle est proche de zéro.

Un exemple de code entropique adapté pour transcoder ce type de train de données binaires est le suivant :

- si la valeur d'un mot est nulle, le code entropique lui attribue un mot transcodé de deux bits dont le premier est à « 1 » et le second à la valeur du signe du mot,
- si la valeur d'un mot est non nulle, on détermine la position de son bit à « 1 » de poids le plus élevé, de sorte que le code entropique lui attribue un mot transcodé obtenu par concaténation d'un nombre de bits à « 0 » correspondant à ladite position déterminée, d'un bit à « 1 », du bit de signe du mot et des bits du mot de poids inférieur à son bit à « 1 » de poids le plus élevé.

Autrement dit, ce code entropique consiste, pour un mot de taille fixe, à coder la position de son bit à « 1 » de poids le plus élevé et son signe à l'aide d'un code de taille variable, puis à concaténer les bits du mot de poids inférieur à ce bit à « 1 » de poids le plus élevé au code de taille variable.

De façon plus concrète, le principe de ce code entropique est fourni dans le tableau suivant, où S désigne le bit de signe du mot binaire à transcoder :

| valeur du coefficient | mot binaire | mot transcodé |
|---|---|---|
| 0 | S000...0000 | 1S |
| +1, -1 | S000...0001 | 01S |
| +2, +3, -2, -3 | S000...001X | 001SX |
| +4, +5, +6, +7, -4, -5, -6, -7 | S000...01XY | 0001SXY |
| plus généralement | la position du bit à 1 de poids le plus élevé est n | <n zéros> 1 S <(n-1) bits de poids faible> |

On vérifie que, pour chaque mot transcodé, le nombre de « 0 » avant le premier « 1 » permet de définir la taille du mot transcodé complet. Les mots transcodés sont donc séparables s'ils sont lus en série dans un train de données binaires transcodées.

Ce codage entropique résulte d'opérations de logique binaire réalisées sur des mots binaires. Par conséquent, l'homme du métier comprendra qu'une variante de ce code, consistant à réaliser des opérations de logique binaire complémentaires sur des compléments à 2 des mots binaires, fonctionne de la même façon. De même, dans l'exemple précédent, il a été choisi par convention de coder la position du bit à « 1 » le plus élevé à l'aide de bits à « 0 » dont le nombre correspond à cette position. L'homme du métier comprendra également qu'une variante de ce code, consistant à choisir une autre convention, fonctionne de la même façon.

On peut donc définir ce code entropique comme faisant partie d'une famille de codes entropiques équivalents comportant les étapes générales suivantes :

- si un mot n'est pas constitué de bits tous identiques, on détermine la position de son bit de poids le plus faible, dit bit de référence, au delà duquel tous les bits de poids supérieur du mot sont identiques, de sorte que le code entropique lui attribue un mot transcodé obtenu par concaténation d'un nombre de bits à une même valeur prédéterminée, ce nombre correspondant à ladite position déterminée, d'un bit à une valeur complémentaire de ladite même valeur prédéterminée, d'un bit défini en fonction du signe du mot et des bits du mot de poids inférieur à son bit de référence,
- si un mot est constitué de bits tous identiques, le code entropique lui attribue un mot transcodé de deux bits dont le premier est à ladite valeur complémentaire et le second à une valeur définie en fonction du signe du mot.

Comme indiqué précédemment, ce code entropique, comme tout autre code entropique adapté aux trains de données binaires obtenus par décorrélation d'un signal d'image, de vidéo ou audio réel, a cependant du mal à s'accommoder de la véritable variabilité des statistiques issues des images, vidéos ou sons réels, notamment à cause du bruit présent sur les bits de poids faibles des coefficients obtenus de signaux réels non traités. Ainsi, s'il était appliqué directement aux mots de ces trains de données binaires, il ne fournirait pas une compression optimale.

Pour améliorer la performance du code entropique, on utilise donc, conformément à l'invention, un paramètre B définissant un seuil de bruit B en nombre de bits de poids faibles considérés comme noyés dans du bruit et ne vérifiant donc pas les statistiques optimales d'un signal d'image, de vidéo ou audio décorrélé.

A partir de ce paramètre B, on définit un procédé de transcodage entropique d'un premier train de données binaires constitué de mots à transcoder en un second train de données binaires compressé par utilisation du code entropique précité pour transcoder chaque mot du premier train de données binaires en un mot transcodé. Sur la base du nombre B de bits de poids faibles représentatif d'un niveau de bruit des mots du premier train de données binaires, il comporte l'application des étapes suivantes à chaque mot du premier train de données binaires :

- subdivision du mot en des premier et second sous-mots, le premier sous-mot comportant les B bits de poids faibles du mot, considérés comme noyés dans le bruit, et le second sous-mot comportant les autres bits de poids fort du mot,
- application du code entropique précité au second sous-mot pour obtenir un second sous-mot transcodé, et
- obtention du mot transcodé final par concaténation du premier sous-mot et du second sous-mot transcodé.

A titre d'exempte, pour B = 3, l'application de cette amélioration au code entropique cité précédemment donne concrètement le tableau de transcodage suivant, dans lequel les symboles b désignent les bits considérés comme noyés dans le bruit :

| mot binaire | mot transcodé |
|---|---|
| S000...000bbb | 1Sbbb |
| S000...001bbb | 01Sbbb |
| S000...01Xbbb | 001SXbbb |
| S000...1XYbbb | 0001SXYbbb |

Cette amélioration pourrait tout aussi bien s'appliquer de la même manière à un autre code entropique adapté au transcodage de trains de données binaires issus de la décorrélation d'un signal réel d'image, de vidéo ou audio.

De manière avantageuse mais non obligatoire, le nombre B est déterminé pour chaque train de données binaires considéré, en fonction de paramètres statistiques de ce train de données binaires. Cela rend le transcodage avantageusement adaptatif. Après transcodage du train de données binaires, le nombre B doit alors être fourni avec le train de données transcodé pour permettre une transformation inverse du signal.

Par exemple, le nombre B de bits de poids faibles représentatif d'un niveau de bruit des mots d'un train de données binaires est choisi comme étant la partie entière de la moyenne des positions du bit à « 1 » de poids le plus élevé des mots de ce train de données binaires.

En logique binaire complémentaire ou par convention, B pourrait être choisi comme étant la partie entière de la moyenne des positions du bit à « 0 » de poids le plus élevé des mots de ce train de données binaires.

Ainsi, exprimé en termes plus généraux, B est choisi comme étant la partie entière de la moyenne des positions du bit de référence des mots de ce train de données binaires.

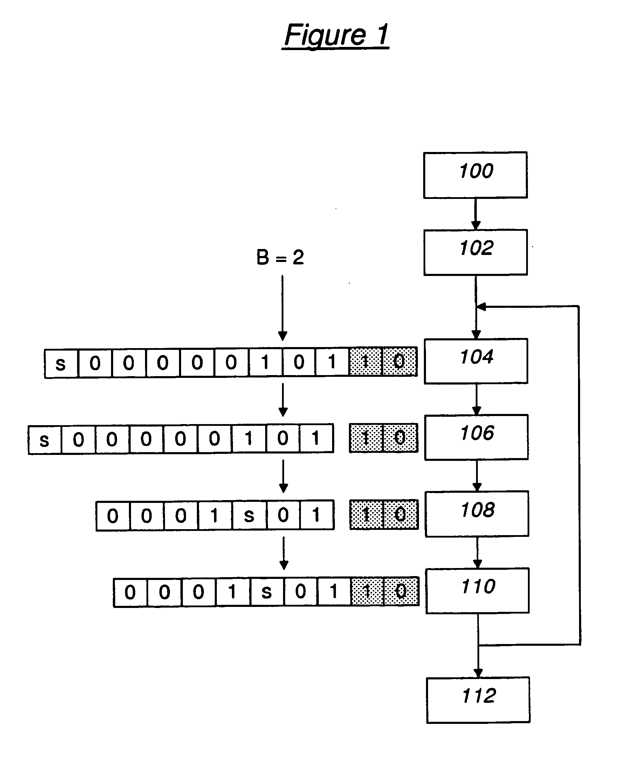

De façon plus précise, une succession d'étapes réalisées par un procédé de transcodage selon l'invention est illustrée sur la figure 1.

Au cours d'une première étape 100, un bloc de transcodage reçoit, sous forme d'un premier train de données binaires, un signal numérique décorrélé par un codeur et constitué de coefficients éventuellement quantifiés.

Au cours d'une étape 102 suivante, un calcul statistique est réalisé sur les mots de ce premier train de données binaires pour déterminer la valeur de B en tant que partie entière de la moyenne des positions du bit à « 1 » de poids le plus élevé de ces mots. A titre purement illustratif, B est par exemple évalué à 2.

Ensuite, lors d'une étape 104, on démarre une boucle itérative sur l'ensemble des mots du premier train de données binaires pour transcoder chacun d'entre eux. Les mots sont par exemple chacun constitués d'un bit de signe s et de dix bits définissant la valeur d'un coefficient. A titre purement illustratif, un mot « s0000010110 » est pris comme exemple.

Lors d'une étape 106 suivante, ce mot est scindé en deux sous-mots. Le premier sous-mot comporte les B = 2 bits de poids faibles du mot, considérés comme noyés dans le bruit, en l'occurrence « 10 ». Le second sous-mot comporte les autres bits de poids fort du mot et son bit de signe s, soit « s00000101 ».

Au cours d'une étape 108 suivante, on applique le code entropique cité précédemment au second sous-mot. La position de son bit à « 1 » de poids le plus élevé est 3, de sorte que le code entropique lui attribue un second sous-mot transcodé obtenu par concaténation de trois bits à « 0 », d'un bit à « 1 », du bit de signe s et des bits du second sous-mot de poids inférieur à son bit à « 1 » de poids le plus élevé. Cela donne le second sous-mot transcodé suivant : « 0001 s01 ».

Enfin, au cours d'une étape 110, un mot transcodé correspondant au mot « s0000010110 » est obtenu par concaténation du second sous-mot transcodé et du premier sous-mot. Cela donne finalement « 0001 s0110 ».

Tant que tous les mots du premier train de données binaires ne sont pas transcodés, on reprend le procédé à l'étape 104.

Sinon, on passe à une étape finale 112 de fin de transcodage par fourniture d'un second train de données binaires transcodées, constitué des mots transcodés précédemment, avec la valeur de B codée sur un nombre prédéterminé de bits. La transmission de B et du second train de données binaires transcodées suffit en effet pour retrouver les coefficients du signal décorrélé.

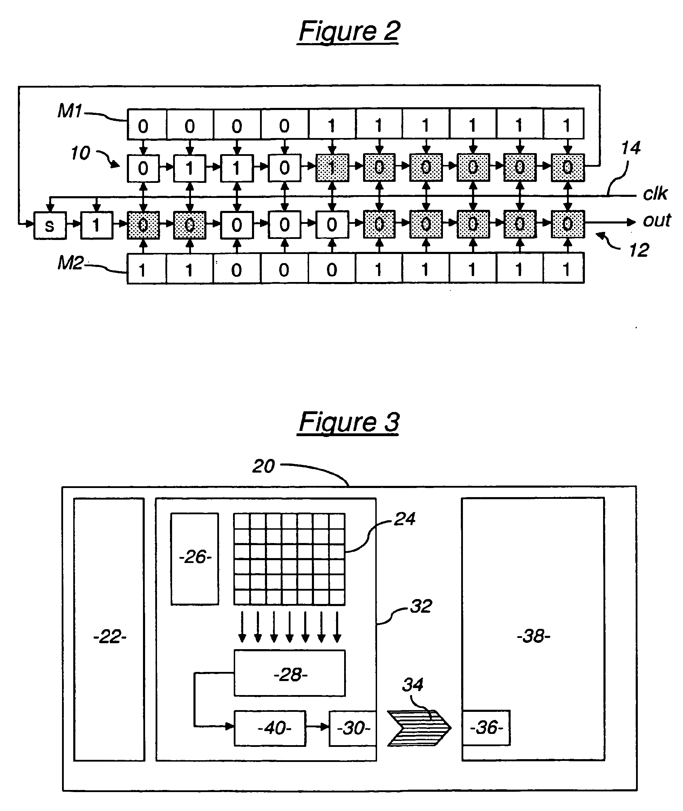

La figure 2 illustre un exemple d'architecture possible pour mettre en oeuvre le procédé de transcodage décrit ci-dessus, lorsque le code entropique précédemment défini est appliqué.

L'architecture proposée comporte deux registres à décalage 10 et 12 disposés en série. Chaque registre à décalage est composé de cellules comportant, sauf la première, une entrée « in » reliée à une sortie « out » de la cellule précédente. De plus, l'entrée « in » de la première cellule du second registre à décalage 12 est reliée à la sortie de la dernière cellule du premier registre à décalage 10.

Chaque cellule de chaque registre à décalage est en outre reliée à un circuit 14 de fourniture d'un signal d'horloge qui provoque, à chaque coup d'horloge k, le report de l'entrée de chaque cellule sur sa sortie selon la relation out (k) = in (k-1), pour une lecture séquentielle du contenu des registres 10 et 12. Enfin, de façon originale, chaque cellule de chaque registre à décalage comporte une entrée de contrôle supplémentaire qui permet de court-circuiter cette cellule lorsqu'elle est par exemple portée à « 1 ». Autrement dit, lorsque le court-circuit est activé pour une cellule, out (k) = in (k) et la valeur portée par cette cellule n'est pas lue.

L'architecture particulière illustrée sur la figure 2 est adaptée au transcodage de mots de dix bits de valeur et d'un bit de signe. Elle est représentée dans le cas particulier du traitement du mot « s0000010110 » dont le transcodage a été détaillé précédemment.

Le premier registre à décalage 10 comporte autant de cellules que de bits de valeur du mot à traiter, soit dix cellules. Elles sont chargées à la valeur du mot, la première cellule portant le bit de poids le plus faible et la dernière celui de poids le plus fort.

Le second registre à décalage 12 comporte deux cellules de plus que le premier. Ses deux premières cellules sont chargées respectivement au bit de signe du mot et à « 1 ». Les dix suivantes sont chargées à « 0 ».

En logique complémentaire ou selon les conventions choisies, on adaptera bien sûr les valeurs des cellules des registres en fonction de la variante de codage entropique mise en oeuvre.

Les entrées de contrôle des dix cellules du premier registre à décalage 10 sont alimentées respectivement par dix bits d'un premier mot M1 de court-circuit. Les entrées de contrôle des dix cellules chargées à « 0 » du second registre à décalage 12 sont alimentées respectivement par dix bits d'un second mot M2 de court-circuit.

Les premier et second mots M1 et M2 sont définis à partir de la valeur de B et de la position n du bit à « 1 » le plus élevé du mot à transcoder.

Pour cela, on définit un premier mot intermédiaire Mi1 portant, au format binaire et sur dix bits, la valeur $2^B$-1. Par exemple, si B vaut 2, Mi1 vaut « 0000000011 ». On définit aussi un second mot intermédiaire Mi2 portant, au format binaire et sur dix bits, la valeur $2^n$-1. Par exemple, pour le mot « s0000010110 », n vaut 5. Mi2 vaut donc « 0000011111 ». On notera aussi que Mi2/2 vaut « 0000001111 », ce qui correspond à un décalage vers les bits de poids faibles de Mi2.

En pratique, le second mot intermédiaire Mi2 s'obtient très facilement à partir du mot à transcoder. On met son bit de poids le plus élevé à la valeur du bit de poids le plus élevé du mot à transcoder et on descend itérativement vers les bits de poids inférieurs à l'aide d'une relation logique OU entre son bit de rang n et le bit de rang n-1 du mot à transcoder pour définir la valeur de son bit de rang n-1.

Le premier mot M1 est alors défini par la relation logique suivante :

M1 = NON (Mi2/2 OU Mi1).

Dans l'exemple illustré sur la figure 2, cela donne :

M1 = NON ( « 0000001111 » OU « 0000000011 »),
M1 = NON (« 0000001111 »),
M1 = « 1111110000 ».

Le second mot M2 est défini par la relation logique suivante :

M2 = (NON Mi2) OU Mi1.

Dans l'exemple illustré sur la figure 2, cela donne :

M2 = (NON « 0000011111 ») OU « 0000000011 »,
M2 = « 1111100000 » OU « 0000000011 »,
M2 = « 1111100011 ».

Sur la figure 2, les mots M1 et M2 sont représentés de gauche à droite dans le sens ascendant des poids de leurs bits. Chaque fois qu'ils ont un bit à « 1 », ils court-circuitent la cellule correspondante qui est alors représentée en grisé. Les valeurs des cellules grisées n'étant pas transmises par les deux registres à décalage en série, on voit, en remontant les cellules de la dernière cellule du second registre 12 à la première cellule du premier registre 10, que le mot transcodé fourni séquentiellement en sortie du second registre à décalage 12 prend, dans cet exemple, la valeur « 0001s0110 ».

Il apparaît clairement que le procédé amélioré de transcodage par utilisation d'un code entropique tel que celui décrit précédemment reste performant même en présence de trains de données binaires portant des valeurs décorrélées mais bruitées.

Lorsqu'en plus la valeur de B est calculée automatiquement à partir de données statistiques extraites des trains de données binaires, cela rend ce procédé de transcodage adaptatif, ce qui est particulièrement avantageux. Le paramètre B étant destiné à prendre une valeur assez faible (i.e. il quantifie un niveau de bruit en nombre de bits a priori noyés dans le bruit), il peut en outre lui-même être codé sur un faible nombre de bits, par exemple trois. Le surcoût de la propriété adaptative du procédé de transcodage est donc négligeable. On notera également que la valeur de B peut être déterminée a priori, sans résulter d'un calcul statistique particulier.

Le procédé de transcodage décrit précédemment peut être mis en oeuvre dans un dispositif numérique de capture d'images dont un module optique est représenté sur la figure 3.

On notera que ce dispositif de capture d'images est par exemple un appareil photo numérique, une caméra ou un caméscope numérique, ou bien un dispositif portable de télécommunication ou de traitement de données quelconque muni d'un tel appareil photo, caméra ou caméscope intégré.

Sur cette figure, un module optique 20 de capteur, par exemple un capteur CMOS, comporte un bloc optique 22 et une matrice 24 d'éléments sensibles, les photodiodes qui, associées à des moyens de lecture électrique non représentés, forment des pixels d'une image à capturer.

La matrice de pixels 24 est associée à un dispositif de séquencement 26 et à un dispositif de conversion analogique/numérique 28, permettant l'acquisition d'une image numérique matricielle de pixels. La matrice de pixels 24, le dispositif de séquencement 26 et le dispositif de conversion analogique/numérique 28 forment, avec une interface 30 de transmission des images numériques acquises, un circuit électronique 32 généralement appelé « circuit imageur » ou « plan focal » du capteur CMOS.

L'interface 30 du circuit imageur 32 est en outre généralement reliée par un lien physique électronique 34 à l'interface 36 de réception d'images numériques d'un circuit coprocesseur graphique 38 qui permet d'implémenter des algorithmes d'amélioration de la qualité des images numériques acquises et de mettre éventuellement en oeuvre un procédé de codage de décorrélation par blocs tel que l'un de ceux précités.

Les dispositifs d'acquisition d'images destinés au grand public tels que les appareils photos numériques ou caméscopes numériques à capteur CMOS, ou les modules optiques de téléphones portables, sont soumis à de nombreuses contraintes.

En particulier, le débit du lien physique électronique 34 entre le circuit imageur 32 et le circuit coprocesseur graphique 38 est limité. A titre d'exemple, le protocole SMIA respecté par un grand nombre de circuits imageurs limite le débit à 400 Mbits/s. Or une vidéo non compressée d'un circuit imageur de 2 Mégapixels codés chacun sur 10 bits à 30 images par secondes nécessite un débit de 600 Mbits/s. Cette contrainte de débit est l'une des raisons pour lesquelles la résolution en mode vidéo est généralement limitée.

En outre, la réduction de la consommation électrique est une contrainte majeure pour les appareils nomades, dont les capteurs d'images. L'une des plus grandes sources de consommation de ces capteurs d'images étant le transfert des données numériques entre le circuit imageur 32 et le circuit coprocesseur graphique 38 par le lien physique électronique 34, le meilleur moyen de réduire cette consommation s'avère être la réduction de la quantité des données transmises.

Enfin, les dernières générations de filtres d'amélioration d'images pouvant être intégrés dans le circuit coprocesseur graphique 38 nécessitent le stockage de plusieurs images successives. Pour des raisons économiques liées aux coûts des mémoires et en raison de l'augmentation de la quantité d'information brute des images, ces algorithmes ne trouvent pas encore leur place dans des dispositifs à faible coût.

Les trois contraintes précitées montrent le besoin d'implanter un codeur 40 performant permettant d'envisager une bonne compression des données numériques acquises, soit dans le circuit coprocesseur graphique 38 pour permettre d'envisager l'utilisation d'algorithmes de filtrage complexes, soit préférentiellement dans le circuit imageur 32 pour limiter le débit transmis par le lien physique électronique 34. Ce codeur 40 est spécialement conçu pour mettre en oeuvre un codage de décorrélation par blocs, éventuellement une quantification, puis un procédé de transcodage entropique tel que celui décrit précédemment.

Comme cela est représenté sur la figure 3, il est avantageux de l'implanter dans le circuit imageur 32. En effet, dans ce cas, le débit supporté par le lien physique électronique 34 est largement réduit.

Sur la figure 3, le codeur 40 est représenté en sortie du dispositif de conversion analogique/numérique 28 juste avant l'interface de transmission 30. Selon diverses variantes d'implémentation, il peut aussi être implémenté partiellement dans le domaine analogique, en amont du dispositif de conversion analogique/numérique 28, notamment pour réaliser le codage de décorrélation par blocs, et partiellement dans le domaine numérique, en aval du dispositif de conversion analogique/numérique 28, notamment pour réaliser le transcodage entropique.

Second aspect : codage de décorrélation d'une image par décomposition dans une base de fonctions discrètes prédéterminée

Comme indiqué précédemment, le circuit imageur 32 du dispositif de capture d'images représenté schématiquement sur la figure 3 intègre avantageusement un codeur 40 apte à réaliser un codage de décorrélation d'une image par blocs puis un transcodage selon l'invention.

Il convient de noter cependant que l'augmentation de la résolution spatiale d'un dispositif de capture d'images, quantifiée par le nombre de Mégapixels de son circuit imageur, est aujourd'hui le critère d'innovation principal pour le grand public. En raison du coût des circuits intégrés et de la volonté de miniaturiser les modules optiques, il s'avère donc nécessaire de diminuer la taille des circuits d'imagerie. Ceci a pour conséquence que toute implantation d'un algorithme de codage de décorrélation par blocs dans un circuit imageur de dispositif de capture d'images est très fortement contrainte en terme de complexité.

En outre, il est intéressant de prévoir un procédé de codage qui prenne réellement en compte les spécificités des capteurs CMOS grand public qui mettent en oeuvre, dans le dispositif de séquencement 26, un mode de lecture séquentielle des valeurs des pixels d'une image, en mode d'obturation électronique ligne par ligne de la première ligne à la dernière ligne de l'image. Ce mode de lecture par obturations électroniques successives des lignes vise notamment à compenser le manque de sensibilité des capteurs CMOS à bas coût.

Mais les contraintes électroniques, de taille, de consommation et la nécessité d'assurer un mode vidéo imposent aussi aux circuits d'imagerie de fonctionner dans ce mode de lecture. Celui-ci implique qu'une image numérique est par nécessité lue ligne par ligne et que les pixels de deux lignes différentes ne sont pas cohérents temporellement, parce qu'ils ne représentent pas exactement le même instant d'une scène.

Une conséquence de ce mode de fonctionnement est que les différentes lignes ne sont pas complètement corrélées entre elles, alors que les principes de codage classiques généralement utilisés supposent une même cohérence horizontale et verticale des images numériques sur lesquelles ils s'appliquent. En outre, pour réaliser un codage par blocs, par exemple de taille 8x8 pixels, d'une image, il faut acquérir séquentiellement et stocker l'ensemble des lignes nécessaires avant d'effectuer le traitement. En raison de la mémoire en général limitée sur un circuit imageur, cette contrainte pose problème.

Le procédé de codage amélioré qui va maintenant être détaillé tire profit de ce mode de lecture d'une image ligne par ligne de la première ligne à la dernière ligne de l'image. Même si le procédé de transcodage précédemment décrit peut s'appliquer au résultat d'un procédé de codage de décorrélation par blocs classique, il est avantageusement combiné à ce procédé de codage amélioré.

En effet, pour adapter le codage au mode de lecture séquentielle ligne par ligne, l'image est subdivisée en blocs disjoints de forme rectangulaire dont la dimension verticale est strictement inférieure à la dimension horizontale. On définit la direction horizontale de l'image et des blocs qui la composent comme étant celle des lignes de l'image dans le mode de lecture séquentielle adopté ligne par ligne. On définit par conséquent la direction verticale de l'image et des blocs qui la composent comme étant celle des colonnes de l'image.

Plus précisément, le second aspect de l'invention porte sur un procédé de codage par blocs d'une image matricielle de pixels constituée d'une pluralité de blocs disjoints, par décompositions bidimensionnelles successives des blocs de cette image dans une base de fonctions discrètes prédéterminée à l'aide de l'application combinée d'un noyau unidimensionnel de décomposition verticale de n pixels et d'un noyau unidimensionnel de décomposition horizontale de p pixels, dans lequel :

- la dimension horizontale P en nombre de pixels de chaque bloc est déterminée comme étant un multiple de p, P = k.p, et une décomposition à $\log_p(P)$ niveau(x) de résolution est réalisée à l'aide du noyau unidimensionnel de décomposition horizontale,

- la dimension verticale N en nombre de pixels de chaque bloc est déterminée comme étant un multiple de n, N = l.n, et une décomposition à $\log_n(N)$ niveau(x) de résolution est réalisée à l'aide du noyau unidimensionnel de décomposition verticale, et

- pour des valeurs de n et p données, on choisit les valeurs de k et l de sorte que la dimension verticale N soit strictement inférieure à la dimension horizontale P.

Par « noyau », on entend de façon classique une fonction discrète élémentaire à partir de laquelle est construite ladite base de fonctions discrètes prédéterminée, notamment par dilatations (variations fréquentielles) et/ou par translations (variations spatiales) du noyau.

En outre, en codage d'images, la décomposition bidimensionnelle d'un bloc de pixels dans une base de fonctions discrètes formant vecteurs de cette base est séparable horizontalement et verticalement. Par conséquent, le noyau à partir duquel la base est construite peut être considéré comme la combinaison d'un noyau unidimensionnel horizontal et d'un noyau unidimensionnel vertical pour la formation de « portions de vecteurs » horizontales et de « portions de vecteurs » verticales.

Par ailleurs, dans la suite de la description, le terme de « projection » sera utilisé, notamment dans des expressions tels que « noyau unidimensionnel de projection horizontale », « noyau unidimensionnel de projection verticale » ou « projection d'ordre ... ».

En effet, en codage d'images, lorsque la décomposition bidimensionnelle d'un bloc de NP pixels est effectuée dans une base de NP fonctions discrètes formant vecteurs de cette base, les NP coefficients obtenus de cette décomposition sont en fait le résultat de projections (au sens mathématique du terme) du bloc de NP pixels sur chacun des vecteurs de la base de NP fonctions discrètes.

Par conséquent, au vu de ce qui précède, parler de projections horizontales ou verticales revient à parler de décompositions unidimensionnelles horizontales ou verticales ou encore d'opérations de filtrage dans la direction horizontale ou verticale. En fait, on s'aperçoit que différentes terminologies, empruntées aux domaines du traitement de signal, du codage, des mathématiques appliquées sont couramment utilisées pour désigner les mêmes opérations.

Plus précisément, les opérations qui seront désignées dans la suite de la description par la notion de projections d'ordre $\log_p(P)$ ou $\log_n(N)$ sont clairement des opérations de décomposition à $\log_p(P)$ ou $\log_n(N)$ niveau(x) de résolution ou encore correspondent à $\log_p(P)$ ou $\log_n(N)$ opérations consécutives de filtrage.

En limitant le nombre de lignes des blocs par rapport au nombre de colonnes, la plus grande cohérence des pixels d'une même ligne par rapport aux pixels d'une même colonne, dans une acquisition séquentielle ligne par ligne des valeurs de pixels, est correctement prise en compte. Ce procédé est donc avantageusement mis en oeuvre dans des dispositifs de capture d'images peu chers et utilisables par un large public tel que les capteurs CMOS les plus simples. En outre, en limitant davantage le nombre de lignes que le nombre de colonnes d'un bloc, la mémoire d'un dispositif mettant en oeuvre ce procédé est moins sollicitée et il est plus facile d'envisager d'implanter ce procédé dans le codeur 40 du circuit imageur 32.

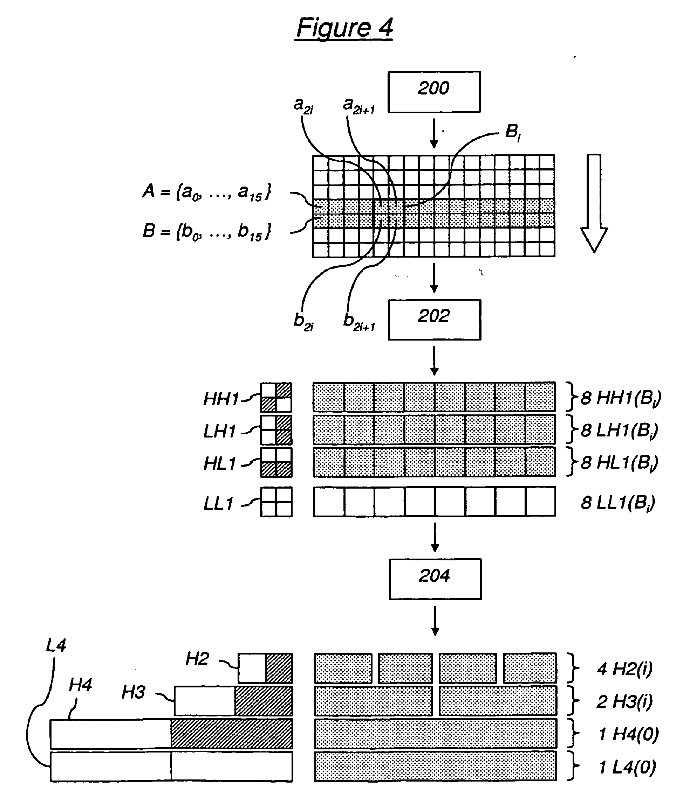

Dans l'exemple non limitatif illustré sur la figure 4, la dimension horizontale P en nombre de pixels de chaque bloc est fixée à 16 et la dimension verticale N en nombre de pixels de chaque bloc est fixée à 2. Chaque bloc comporte donc 32 pixels répartis sur deux lignes successives.

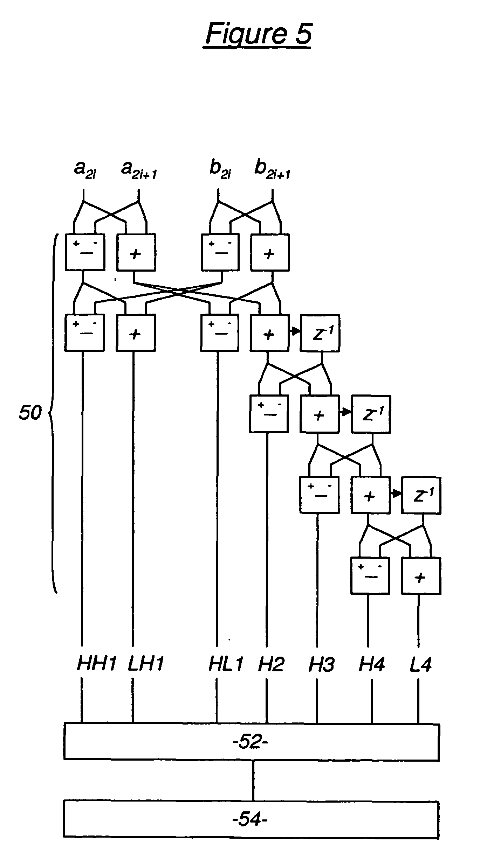

La décomposition bidimensionnelle d'un tel bloc est réalisée dans une base d'ondelettes discrètes de Haar. Selon cette base, les noyaux unidimensionnels de projection verticale et horizontale comportent chacun n = p = 2 pixels, comme cela est bien connu. Une base d'ondelettes de Haar est choisie parce que l'implantation d'une telle décomposition peut être simplement réalisée à l'aide d'additionneurs et de soustracteurs, comme cela sera mis en évidence ci-dessous et en référence à la figure 5.

Ainsi, selon cet exemple, une projection d'ordre $\log_2(2) = 1$ est réalisée verticalement sur chaque colonne de 2 pixels du bloc. Cette projection d'ordre 1 consiste à additionner les 2 pixels pour obtenir un premier paramètre basse fréquence ou à forte entropie et à les soustraire pour obtenir un second paramètre haute fréquence ou à faible entropie.

Selon cet exemple encore, une projection d'ordre $\log_2(16) = 4$ est réalisée horizontalement sur chaque ligne de 16 pixels du bloc. Cette projection d'ordre 4 consiste à :

- additionner les 16 pixels de la ligne considérée deux à deux pour obtenir 8 premiers paramètres basse fréquence ou à forte entropie d'ordre 1 et à les soustraire deux à deux pour obtenir 8 seconds paramètres haute fréquence ou à faible entropie d'ordre 1,
- additionner les 8 paramètres basse fréquence d'ordre 1 (ou à forte entropie) deux à deux pour obtenir 4 premiers paramètres basse fréquence ou à forte entropie d'ordre 2 et à les soustraire deux à deux pour obtenir 4 seconds paramètres haute fréquence ou à faible entropie d'ordre 2,
- additionner les 4 paramètres basse fréquence d'ordre 2 (ou à forte entropie) deux à deux pour obtenir 2 premiers paramètres basse fréquence ou à forte entropie d'ordre 3 et à les soustraire deux à deux pour obtenir 2 seconds paramètres haute fréquence ou à faible entropie d'ordre 3, et
- additionner les 2 paramètres basse fréquence d'ordre 3 (ou à forte entropie) pour obtenir un premier paramètre basse fréquence ou à forte entropie d'ordre 4 et à les soustraire pour obtenir un second paramètre haute fréquence ou à faible entropie d'ordre 4.

De façon équivalente, selon cet exemple, la projection verticale et le premier ordre de la projection horizontale peuvent être réalisés simultanément sous la forme d'une projection bidimensionnelle à l'aide d'un noyau bidimensionnel de Haar, en considérant chaque bloc de 2x16 pixels comme étant constitué de 8 sous-blocs disjoints successifs carrés de 2x2 pixels chacun. Une telle projection génère un paramètre basse fréquence ou à forte entropie et trois paramètres haute fréquence ou à faible entropie par sous-bloc.

Ensuite, une projection horizontale d'ordre 3 est appliquée aux 8 paramètres basse fréquence (ou à forte entropie) obtenus.

Plus précisément, lors d'une première étape de lecture 200, le circuit imageur 32 lit séquentiellement une première ligne A, par exemple en mode d'obturation électronique ligne par ligne. Les valeurs des pixels de cette ligne sont alors mémorisées. Le nombre de pixels dans la première ligne A est avantageusement 16 ou un multiple de 16, c'est-à-dire un multiple de la dimension horizontale d'un bloc.

Ensuite, le circuit imageur 32 lit séquentiellement une seconde ligne B, par exemple en mode d'obturation électronique ligne par ligne.

Pendant la lecture de cette seconde ligne B, on passe à une étape 202 de réalisation d'une projection bidimensionnelle sur chaque bloc de l'ensemble des deux lignes A et B lues. Dans l'exemple illustré sur la figure 4, par souci de simplification uniquement, chaque ligne est considérée comme comportant 16 pixels : en d'autres termes, dans cet exemple particulièrement simple mais pouvant être généralisé, l'ensemble des deux lignes A et B comporte un seul bloc. Les pixels de la ligne A sont notés $a_0$, ..., $a_{15}$ et les pixels de la ligne B sont notés $b_0$, ..., $b_{15}$.

Ce bloc de 32 pixels $a_0$, ..., $a_{15}$ et $b_0$, ..., $b_{15}$ peut être considéré comme constitué de 8 sous-blocs carrés notés $B_i$ ($0 \leq i \leq 7$). Chacun de ces sous-blocs carrés $B_i$ comporte quatre pixels $a_{2i}$, $a_{2i+1}$, $b_{2i}$ et $b_{2i+1}$.

Lors de l'étape 202, on projette chaque sous-bloc carré $B_i$ dans une base constituée de quatre blocs de Haar notés respectivement LL1, HL1, LH1 et HH1. Ces quatre blocs sont représentés sur la figure 4 par des blocs carrés de quatre pixels hachurés (valeurs soustraites) ou blancs (valeurs ajoutées) disposés pour mémoire en partie gauche de l'illustration de l'étape 202, en vis-à-vis des coefficients qu'ils génèrent.

Le premier bloc de Haar LL1 représente une composante basse fréquence. Compte tenu des propriétés générales des images, qui sont en fait essentiellement constituées de zones homogènes différentes les unes des autres séparées par des contours locaux, cette composante basse fréquence est aussi un paramètre à forte entropie. Son coefficient de projection est obtenu par le calcul suivant :

$$LL1\ (B_i) = a_{2i} + a_{2i+1} + b_{2i} + b_{2i+1}.$$

Le deuxième bloc de Haar HL1 représente une composante haute fréquence, ou, plus précisément, haute fréquence verticalement et basse fréquence horizontalement. Compte tenu des propriétés générales des images, qui sont en fait essentiellement constituées de zones homogènes différentes les unes des autres séparées par des contours locaux, cette composante haute fréquence est aussi un paramètre à faible entropie. Son coefficient de projection est obtenu par le calcul suivant :

$$HL1\ (B_i) = a_{2i} + a_{2i+1} - b_{2i} - b_{2i+1}.$$

Le troisième bloc de Haar LH1 représente une composante haute fréquence et à faible entropie, ou, plus précisément, haute fréquence horizontalement et basse fréquence verticalement. Son coefficient de projection est obtenu par le calcul suivant :

$$LH1\ (B_i) = a_{2i} - a_{2i+1} + b_{2i} - b_{2i+1}.$$

Le quatrième bloc de Haar HH1 représente une composante haute fréquence et à faible entropie, ou, plus précisément, haute fréquence horizontalement et haute fréquence verticalement. Son coefficient de projection est obtenu par le calcul suivant :

$$HH1\ (B_i) = a_{2i} - a_{2i+1} - b_{2i} + b_{2i+1}.$$

La projection de tous les sous-blocs carrés $B_i$ dans la base des blocs de Haar précités fournit 4x8 = 32 coefficients. Les 24 coefficients haute fréquence et à faible entropie sont conservés (8 coefficients HL1 $(B_i)$, 8 coefficients LH1 $(B_i)$, 8 coefficients HH 1 $(B_i)$), tandis que les 8 coefficients basse fréquence et à forte entropie LL1 $(B_i)$ ne sont pas conservés mais sont traités au cours d'une étape 204 de réalisation d'une projection horizontale d'ordre 3. Sur l'illustration de l'étape 202 de la figure 4, les coefficients conservés sont représentés en grisé tandis que les coefficients non conservés sont représentés en blanc.

Lors de l'étape 204, à un premier ordre, on projette chaque paire de coefficients {LL1 $(B_{2i})$ ; LL1 1 $(B_{2i+1})$} dans une base constituée de deux blocs de Haar unidimensionnels notés respectivement L2 et H2. Seul le bloc H2 est représenté sur la figure 4 par un bloc rectangulaire de deux « pixels » disposés horizontalement dont l'un est blanc (valeur ajoutée) et l'autre est hachuré (valeur soustraite). Ce bloc H2 est disposé pour mémoire en partie gauche de l'illustration de l'étape 204, en vis-à-vis des coefficients qu'il génère et qui sont conservés. Les coefficients générés par le bloc L2 n'étant pas conservés mais traités à un deuxième ordre de la projection horizontale, ils ne sont pas représentés et le bloc L2 non plus, par souci de simplification de l'illustration de l'étape 204.

Le premier bloc de Haar unidimensionnel L2 représente une composante basse fréquence à forte entropie. Son coefficient de projection est obtenu par le calcul suivant :

$$L2\ (i) = LL1\ (B_{2i}) + LL1\ (B_{2i+1}).$$

Le second bloc de Haar unidimensionnel H2 représente une composante haute fréquence à faible entropie. Son coefficient de projection est obtenu par le calcul suivant :

$$H2\ (i) = LL1\ (B_{2i}) - LL1\ (B_{2i+1}).$$

La projection des quatre paires de coefficients {LL1 $(B_{2i})$ ; LL1 $(B_{2i+1})$} dans la base des blocs de Haar unidimensionnels précités fournit 8 coefficients. Les 4 coefficients haute fréquence et à faible entropie sont conservés (4 coefficients H2(i)), tandis que les 4 coefficients basse fréquence et à forte entropie L2(i) sont traités à un deuxième ordre de la projection horizontale. Sur l'illustration de la figure 4, les coefficients conservés sont représentés en grisé tandis que les coefficients non conservés ne sont pas représentés.

Au deuxième ordre de la projection horizontale, on projette chaque paire de coefficients {L2 (2i) ; L2 (2i+1)} dans une base constituée de deux blocs de Haar unidimensionnels notés respectivement L3 et H3, identiques à L2 et H2 mais oeuvrant à une échelle double. Seul le bloc H3 est représenté sur la figure 4 par un bloc rectangulaire de deux « pixels » disposés horizontalement dont l'un est blanc (valeur ajoutée) et l'autre est hachuré (valeur soustraite). Ce bloc H3 est disposé pour mémoire en partie gauche de l'illustration de l'étape 204, en vis-à-vis des coefficients qu'il génère et qui sont conservés. Les coefficients générés par le bloc L3 n'étant pas conservés mais traités à un troisième ordre de la projection horizontale, ils ne sont pas représentés et le bloc L3 non plus, par souci de simplification de l'illustration de l'étape 204.

Le premier bloc de Haar unidimensionnel L3 représente une composante basse fréquence à forte entropie. Son coefficient de projection est obtenu par le calcul suivant :

$$L3\ (i) = L2\ (2i) + L2\ (2i+1).$$

Le second bloc de Haar unidimensionnel H3 représente une composante haute fréquence à faible entropie. Son coefficient de projection est obtenu par le calcul suivant :

$$H3\ (i) = L2\ (2i) - L2\ (2i+1).$$

La projection des deux paires de coefficients {L2 (2i) ; L2 (2i+1)} dans la base des blocs de Haar unidimensionnels précités fournit 4 coefficients. Les 2 coefficients haute fréquence et à faible entropie sont conservés (2 coefficients H3(i)), tandis que les 2 coefficients basse fréquence et à forte entropie L3(i) sont traités à un troisième ordre de la projection horizontale. Sur l'illustration de la figure 4, les coefficients conservés sont représentés en grisé tandis que les coefficients non conservés ne sont pas représentés.

Au troisième ordre de la projection horizontale, on projette les deux coefficients L3(0) et L3(1) dans une base constituée de deux blocs de Haar unidimensionnels notés respectivement L4 et H4, identiques à L3 et H3 mais oeuvrant à une échelle double. Le bloc H4 est représenté sur la figure 4 par un bloc rectangulaire de deux « pixels » disposés horizontalement dont l'un est blanc (valeur ajoutée) et l'autre est hachuré (valeur soustraite). Ce bloc H4 est disposé pour mémoire en partie gauche de l'illustration de l'étape 204, en vis-à-vis du coefficient qu'il génère et qui est conservé. Le bloc L4 est représenté sur la figure 4 par un bloc rectangulaire de deux « pixels » blancs disposés horizontalement (valeurs ajoutées). Ce bloc L4 est disposé pour mémoire en partie gauche de l'illustration de l'étape 204, en vis-à-vis du coefficient qu'il génère et qui est conservé.

Le premier bloc de Haar unidimensionnel L4 représente une composante basse fréquence à forte entropie. Son coefficient de projection est obtenu par le calcul suivant :

$$L4\ (0) = L3\ (0) + L3\ (1).$$

Le second bloc de Haar unidimensionnel H4 représente une composante haute fréquence à faible entropie. Son coefficient de projection est obtenu par le calcul suivant :

$$H4\ (0) = L3\ (0) - L3\ (1).$$

La projection des deux coefficients L3(0) et L3(1) dans la base des blocs de Haar unidimensionnels précités fournit 2 coefficients H4(0) et L4(0). Ces 2 coefficients sont conservés et représentés en grisé sur la figure 4.

En conclusion, on conserve 8 coefficients $HH1(B_i)$, 8 coefficients $LH1(B_i)$, 8 coefficients $HL1(B_i)$, 4 coefficients H2(i), 2 coefficients H3(i), 1 coefficient H4(0) et 1 coefficient L4(0) ; soit 32 coefficients. On a ainsi réalisé une transformation inversible formant un codage sans perte qui fournit un seul coefficient à forte entropie, le coefficient L4(0) représentant la moyenne des pixels du bloc considéré.

La figure 5 illustre un exemple d'architecture possible pour mettre en oeuvre le procédé précédemment décrit.

Un premier étage 50 de l'architecture proposée comporte des additionneurs, représentés par des symboles « + », des soustracteurs, représentés par des symboles « - » et des éléments de mémoire, chacun de la taille d'un unique coefficient et représentés par des symboles « $z^{-1}$ ». Ce premier étage 50 réalise les étapes 202, 204 telles que décrites précédemment et fournit, en sortie et au fur et à mesure de la lecture des pixels de la ligne B, les coefficients $HH1(B_i)$, $LH1(B_i)$, $HL1(B_i)$, H2(i), H3(i), H4(0) et L4(0) (notés HH1, LH1, HL1, H2, H3, H4 et L4 sur la figure 5 et dans la suite de la description par souci de simplification).

On notera que de façon classique, les données fournies par les additionneurs et soustracteurs utilisant les éléments de mémoire « $z^{-1}$ », c'est-à-dire ceux réalisant la projection horizontale d'ordre 3, autrement dit une transformation horizontale de Haar sur 8 paramètres, sont également sous-échantillonnées à chaque ordre de la transformation de sorte qu'il y ait finalement autant de coefficients résultant de la décomposition bidimensionnelle que de pixels à l'origine.

Ensuite, les coefficients HH1, LH1, HL1, H2, H3, H4 et L4 obtenus par cette décomposition bidimensionnelle de chaque bloc sont éventuellement quantifiés dans un bloc de quantification 52 réalisant un codage avec pertes.

En sortie de ce bloc de quantification 52 ou directement après l'étage 50 de codage de source, les coefficients sont transcodés à l'aide d'un bloc de codage entropique 54 réalisant une optimisation de la taille du train de données binaires représentant l'image initiale, par application d'un procédé de transcodage selon l'invention.

Plus généralement, les procédés précédemment décrits peuvent être mis en oeuvre par un programme d'ordinateur téléchargeable depuis un réseau de communication et/ou enregistré sur un support lisible par ordinateur et/ou exécutable par un processeur, comprenant des instructions de code de programme pour l'exécution de leurs étapes décrites en références aux figures 1 et 4.

Il apparaît clairement qu'un procédé de codage tel que décrit précédemment permet de tirer profit d'un dispositif de capture d'images à mode de lecture séquentielle ligne par ligne. Il peut être aisément implanté dans le circuit d'imageur 32 d'un tel dispositif même si ce circuit est limité en espace de stockage par qu'il ne nécessite la mémorisation que d'une seule ligne pour effectuer un traitement par blocs, chaque bloc comportant deux lignes et un plus grand nombre de colonnes.

D'une façon plus générale, si l'espace de stockage du circuit imageur 32 le permet, on peut augmenter le nombre N de lignes des blocs tant qu'il est possible de mémoriser N-1 lignes de pixels pour réaliser le codage par blocs. En choisissant un nombre P de colonnes par blocs toujours strictement supérieur à N, on conserve l'avantage consistant à tirer profit d'une meilleure cohérence horizontale des pixels liée au mode de lecture séquentiel ligne par ligne tout en optimisant l'utilisation des ressources de mémoire.

A l'inverse, il est aussi possible de réduire la dimension verticale des blocs à un seul pixel. Dans ce cas limite, la projection verticale est l'application d'une fonction identité (projection d'ordre 0 avec un noyau unidimensionnel à un pixel). On n'utilise alors plus la cohérence verticale des pixels pour comprimer l'image, mais on utilise encore moins d'espace de stockage.

Par ailleurs, dans l'exemple précédent, il a été présenté un codage utilisant des ondelettes de Haar parce qu'elles impliquent une implémentation simple. Mais il est possible d'envisager d'autres ondelettes, ou même un codage par DCT ou filtrage en sous-bandes sur des blocs rectangulaires. Le second aspect de l'invention n'est en effet pas limité à un codage par blocs et par décompositions bidimensionnelles dans une base de fonctions discrètes en particulier, mais s'applique à tout codage par blocs utilisant d'une façon générale une décomposition bidimensionnelle (séparable horizontalement et verticalement) de chaque bloc dans une base prédéterminée de fonctions discrètes

Enfin, il est important de noter que le second aspect de l'invention détaillé en référence aux figures 4 et 5 se combine avantageusement avec un procédé de transcodage entropique selon l'invention, notamment avec le mode de réalisation décrit en référence aux figures 1 à 3 (premier aspect de l'invention).

Mais l'homme de l'art notera que le second aspect de l'invention est indépendant du premier dans la mesure où il est aussi possible de le mettre en oeuvre sans le combiner avec un procédé de transcodage entropique selon le premier aspect de l'invention. Il peut tout autant précéder un procédé de transcodage connu.

Inversement, le procédé de transcodage entropique décrit selon le premier aspect de l'invention peut être mis en oeuvre sans que ne lui soient fournies en entrées des données nécessairement codées par un procédé selon le second aspect de l'invention. Il peut s'appliquer avantageusement à d'autres procédés de codage par blocs, par exemple ceux connus dans l'état de la technique, dont la finalité est aussi de décorréler un signal d'image, de vidéo ou audio initialement fortement corrélé.

**Revendications**

1. Procédé de transcodage entropique d'un premier train de données binaires constitué de mots à transcoder en un second train de données binaires compressé par utilisation d'un code entropique prédéterminé à longueur variable des mots codés pour transcoder chaque mot du premier train de données binaires en un mot transcodé, **caractérisé en ce que**, sur la base d'un nombre prédéterminé noté B de bits de poids faibles considéré comme représentatif d'un niveau de bruit des mots du premier train de données binaires, il comporte l'application des étapes suivantes à chaque mot (« s0000010110 ») du premier train de données binaires :

- subdivision (106) du mot en des premier et second sous-mots, le premier sous-mot (« 10 ») comportant les B bits de poids faibles du mot et le second sous-mot (« s00000101 ») comportant les autres bits de poids fort du mot, par chargement des bits du mot dans les cellules d'un premier registre de cellules à décalage (10) relié à des premiers moyens (M1) de court-circuit d'une partie de ses cellules, ces premiers moyens de court-circuit étant définis à partir de la valeur du nombre B,
- application (108) du code entropique prédéterminé au second sous-mot pour obtenir un second sous-mot transcodé (« 0001s01 »), par chargement de bits dans les cellules d'un second registre de cellules à décalage (12) relié en série au premier registre à décalage (10) et relié en outre à des seconds moyens (M2) de court-circuit d'une partie de ses cellules, les cellules du second registre à décalage (12) étant chargée de bits à une même valeur prédéterminée, d'un bit à une valeur complémentaire différente de cette valeur prédéterminée et d'un bit à une valeur définie en fonction d'un bit de signe du mot, et
- obtention (110) dudit mot transcodé (« 0001s0110 ») par concaténation du premier sous-mot (« 10 ») et du second sous-mot transcodé (« 0001 s01 »), cette concaténation étant obtenue par une lecture séquentielle des valeurs des cellules non court-circuitées des deux registres de cellules à décalage (10, 12) disposés en série.

2. Procédé de transcodage entropique selon la revendication 1, dans lequel l'application (108) du code entropique prédéterminé au second sous-mot (« s00000101 ») comporte les étapes suivantes :

- si le second sous-mot n'est pas constitué de bits tous identiques, déterminer la position, repérée depuis l'extrémité de poids faible du second sous-mot, de son bit de poids le plus faible, dit bit de référence, au delà duquel tous les bits de poids supérieur du second sous-mot sont identiques,
- obtenir le second sous-mot transcodé (« 0001s01 ») par concaténation d'un nombre de bits à une même valeur prédéterminée, ce nombre correspondant à ladite position déterminée, d'un bit à une valeur complémentaire de ladite même valeur prédéterminée, d'un bit défini en fonction du signe du mot et des bits du second sous-mot de poids inférieur à son bit de référence.

3. Procédé de transcodage entropique selon la revendication 2, dans lequel, si le second sous-mot est constitué de bits tous identiques, le code entropique lui attribue un mot transcodé de deux bits dont le premier est à ladite valeur complémentaire et le second à une valeur définie en fonction du bit de signe du mot.

4. Procédé de transcodage entropique selon l'une quelconque des revendications 1 à 3, comportant les étapes suivantes :

- détermination préalable (102) du nombre prédéterminé B de bits de poids faibles considéré comme représentatif d'un niveau de bruit des mots du premier train de données binaire,
- fourniture (112) du second train de données binaires compressé avec ce nombre B.

5. Procédé de transcodage entropique selon la revendication 4, dans lequel le nombre prédéterminé B de bits de poids faibles considéré comme représentatif d'un niveau de bruit des mots du premier train de données binaires est choisi comme étant la partie entière de la moyenne des positions du bit de poids le plus faible, au delà duquel tous les bits de poids supérieur ont une même valeur prédéterminée, des mots du premier train de données binaires.

6. Procédé de codage par blocs d'une image matricielle de pixels (24) constituée d'une pluralité de blocs disjoints, comportant une étape (202, 204) de décompositions bidimensionnelles successives (202, 204) des blocs de cette image dans une base de fonctions discrètes (LL1, HL1, LH1, HH1, L2, H2, L3, H3, L4, H4) prédéterminée à l'aide de l'application combinée d'un noyau unidimensionnel de décomposition verticale de n pixels et d'un noyau unidimensionnel de décomposition horizontale de p pixels, la direction horizontale des blocs étant définie comme étant celle des lignes de l'image matricielle dans un mode de lecture et/ou de transmission séquentielle ligne par ligne de l'image matricielle, dans lequel :

- la dimension horizontale P en nombre de pixels de chaque bloc est déterminée comme étant un multiple de p, P = k.p, et une décomposition à $\log_p(P)$ niveau(x) de résolution est réalisée à l'aide du noyau unidimensionnel de décomposition horizontale,
- la dimension verticale N en nombre de pixels de chaque bloc est déterminée comme étant un multiple de n, N = l.n, et une décomposition à $\log_n(N)$ niveau(x) de résolution est réalisée à l'aide du noyau unidimensionnel de décomposition verticale, et
- pour des valeurs de n et p données, on choisit les valeurs de k et l de sorte que la dimension verticale N soit strictement inférieure à la dimension horizontale P, et de sorte que $\log_p(P)$ et $\log_n(N)$ soient des entiers naturels,

et dans lequel un procédé de transcodage entropique selon l'une quelconque des revendications 1 à 5 est appliqué à un premier train de données binaires fourni par l'étape (202, 204) de décompositions bidimensionnelles successives des blocs de l'image.

7. Dispositif de capture d'images comportant des moyens (32) de lecture de valeurs des pixels d'une image et des moyens (40) de codage par blocs de ces valeurs pour la fourniture d'un premier train de données binaires constitué de mots à transcoder en un second train de données binaires compressé par utilisation d'un code entropique prédéterminé à longueur variable des mots codés pour transcoder chaque mot du premier train de données binaires en un mot transcodé, **caractérisé en ce que** ces moyens de codage (40) comportent deux registres de cellules à décalage (10, 12) disposés en série et reliés à des moyens (M1, M2) de court-circuit d'une partie de leurs cellules, les cellules du premier registre à décalage (10) étant destinées à être chargées à la valeur de chaque mot à transcoder et les cellules du second registre à décalage (12) étant chargées de bits à une même valeur prédéterminée, d'un bit à une valeur complémentaire différente de cette valeur prédéterminée et d'un bit à une valeur définie en fonction d'un bit de signe du mot, de manière à exécuter les étapes d'un procédé de transcodage ou de codage par blocs selon l'une quelconque des revendications 1 à 6 par une lecture séquentielle des valeurs des cellules non court-circuitées des deux registres de cellules à décalage (10, 12) disposés en série.

8. Dispositif de capture d'images selon la revendication 7, comportant un circuit imageur (32), pour la capture d'images et la conversion analogique/numérique de ces images capturées, et un circuit coprocesseur (38) différent du circuit imageur (32) et relié électroniquement à ce dernier pour un traitement numérique des images capturées, dans lequel les moyens de codage (40) sont intégrés dans le circuit imageur (32).

9. Programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes d'un procédé de transcodage ou de codage par blocs selon l'une quelconque des revendications 1 à 6 lorsque ledit programme est exécuté sur un ordinateur.

## Claims

1. A method for entropic transcoding of a first sequence of binary data consisting of words to transcode into a second compressed sequence of binary data through the use of a predetermined entropic code involving a variable-length of the encoded words in order to transcode each word of the first sequence of binary data into a transcoded word, **characterised in that**, on the basis of a predetermined number, noted B, of low-order bits considered as representative of a noise level of the words of the first sequence of binary data, it includes the application of the following steps to each word ("s0000010110") of the first sequence of binary data:

    - subdivision (106) of the word into first and second subwords, where the first subword ("10") comprises the B low-order bits of the word, and the second subword ("s00000101 ") comprises the other high-order bits of the word, through the load of the bits of the word in the cells of a first cell shift register (10) linked to first means (M1) for short-circuiting of part of its cells, said first means for short-circuiting being defined on the basis of the value of number B,
    - application (108) of the predetermined entropic code to the second subword in order to obtain a second transcoded subword ("0001 s01 "), through the load of bits in the cells of a second cell shift register (12) arranged in series with the first shift register (10) and further linked to second means (M2) for short-circuiting of part of its cells, the cells of the second shift register (12) being loaded with bits at an equal predetermined value, with a bit at a complementary value different from the said predetermined value and with a bit at a value defined as a function of a sign bit of said word, and
    - obtaining (110) the said transcoded word ("0001s0110") by concatenation of the first subword ("10") and of the second transcoded subword ("0001 s01 "), said concatenation being obtained through a sequential reading of values of the non short-circuited cells of said two cell shift registers (10, 12) arranged in series.

2. A method for entropic transcoding according to claim 1, wherein the application (108) of the predetermined entropic code to the second subword ("s00000101") includes the following steps:

    - if the second subword does not consist of bits all of which are identical, the position, marked from the end of lowest-order of the second subword, of its lowest-order bit, called the reference bit, beyond which all the higher-order bits of the second subword are identical is determined,
    - the second transcoded subword ("0001s01") is obtained by concatenation of a number of bits of a predetermined equal value, where this number corresponds to the said determined position, of a bit at a value complementary to the said predetermined equal value, of a bit defined according to the sign of the word, and of the bits of the second subword of lower order than its reference bit.

3. A method for entropic transcoding according to claim 2, wherein, if the second transcoded subword consists of bits all of which are identical, the entropic code attributes to it a transcoded word of two bits, the first of which is at the said complementary value, and the second at a value defined according to the sign bit of the word.

4. A method for entropic transcoding according to any of the claims 1 to 3, including the following steps:

- prior determination (102) of the said predetermined number B of low-order bits considered as representative of a noise level of the words of the first sequence of binary data,
- supply (112) of the said second compressed sequence of binary data with the said number B.

5. A method for entropic transcoding according to claim 4, wherein the said predetermined number B of low-order bits considered as representative of a noise level of the words of the first sequence of binary data is chosen as being the integer part of the average of the positions of the lowest-order bit, beyond which all the higher-order bits have a same predetermined value, of the words of the said first sequence of binary data.

6. A method for block-encoding of a raster image of pixels (14) consisting of multiple separate blocks, including a step (202, 204) of successive two-dimensional decompositions (202, 204) of the blocks of this image in a base of discrete functions (LL1, HL1, LH1, HH1, L2, H2, L3, H3, L4, H4) predetermined using a combined application of a one-dimensional kernel for vertical decomposition of n pixels and of a one-dimensional kernel for horizontal decomposition of p pixels, where the horizontal direction of the blocks is defined as being that of the lines of the raster image in a line-by-line sequential read mode and/or transmission mode of the raster image, wherein:

- the horizontal dimension P as a number of pixels of each block is determined as being a multiple of p, $P = k.p$, and a decomposition at $\log_p(P)$ level(s) of resolution is accomplished using the one-dimensional horizontal decomposition kernel,
- the vertical dimension N as a number of pixels of each block is determined as being a multiple of n, $N = I.n$, and a decomposition at $\log_n(N)$ level(s) of resolution is accomplished using the one-dimensional vertical decomposition kernel, and
- for given values of n and p, the values of k and I are chosen such that the vertical dimension N is strictly less than the horizontal dimension P and such that $\log_p(P)$ and $\log_n(N)$ are natural numbers,

and wherein a method for entropic transcoding according to any of the claims 1 to 5 is applied to a first sequence of binary data supplied by the said step (202, 204) of successive two-dimensional decompositions of the blocks of the image.

7. An image capture device including means (32) for reading of values of the pixels of an image and means (40) for block-encoding of these values for supplying a first sequence of binary data consisting of words to transcode into a second compressed sequence of binary data through the use of a predetermined entropic code involving a variable-length of the encoded words in order to transcode each word of the first sequence of binary data into a transcoded word, **characterised in that** the said encoding means (40) include two cell shift registers (10, 12) arranged in series and linked to means (M1, M2) for short-circuiting of part of their cells, the cells of the first shift register (10) being loaded with the value of each word to transcode and the cells of the second shift register (12) being loaded with bits at an equal predetermined value, with a bit at a complementary value different from the said predetermined value and with a bit at a value defined as a function of a sign bit of said word, so as to execute the steps of a method for transcoding or for block-encoding according to any of the claims 1 to 6 through a sequential reading of values of the non short-circuited cells of said two cell shift registers (10, 12) arranged in series.

8. An image capture device according to claim 7, including an imaging circuit (32), for the capture of images and the analog/digital conversion of these captured images, and a coprocessor circuit (38) different from the imaging circuit (32) and connected electronically to the latter for digital processing of the captured images, wherein the encoding means (40) are integrated into the imaging circuit (32).

9. A computer program downloadable from a communication network and/or recorded on a medium readable by computer and/or executable by a processor, **characterised in that** it comprises program code instructions for the execution of the steps of a method for entropic transcoding or for block-encoding according to any of the claims 1 to 6 when the said program is executed on a computer.

**Patentansprüche**

1. Verfahren zur entropischen Umcodierung einer ersten Binärdatenreihe, die aus Wörtern besteht, die umcodiert werden müssen, in eine zweite Binärdatenreihe, die durch Verwendung eines vorbestimmten entropischen Codes mit variabler Länge der codierten Wörter komprimiert wird, um jedes Wort der ersten Binärdatenreihe in ein umcodiertes Wort umzucodieren, **dadurch gekennzeichnet, dass** es auf Basis einer mit B bezeichneten, vorbestimmten Anzahl an niederwertigsten Bits, die als einen Rauschpegel der Wörter der ersten Binärdatenreihe darstellend betrachtet werden, die Anwendung der nachfolgenden Schritte auf jedes Wort (« s0000010110 ») der ersten Binärdatenreihe umfasst:

   - Unterteilung (106) des Worts in erste und zweite Unterwörter, wobei das erste Unterwort (« 10 ») die B niederwertigsten Bits des Worts und das zweite Unterwort (« s00000101 ») die anderen höchstwertigen Bits des Worts umfasst, indem die Bits des Worts in die Zellen eines ersten Zellenschieberegister (10) geladen werden, das mit ersten Mitteln (M1) zum Kurzschließen eines Teils seiner Zellen verbunden ist, wobei diese Kurzschlussmittel ausgehend von dem Wert der Anzahl B definiert wird,
   - Anwendung (108) des vorbestimmten entropischen Codes auf das zweite Unterwort, um ein umcodiertes zweites Unterwort (« 0001s01 ») zu erhalten, indem Bits in die Zellen eines zweiten Zellenschieberegisters (12) geladen werden, das mit dem ersten Schieberegister (10) in Reihe geschaltet und ferner mit zweiten Mitteln (M2) zum Kurzschließen eines Teils seiner Zellen verbunden ist, wobei die Zellen des zweiten Schieberegisters (12) mit Bits mit dem gleichen vorbestimmten Wert, mit einem Bit mit komplementärem Wert, der sich von diesem vorbestimmten Wert unterscheidet, und mit einem Bit mit einem in Abhängigkeit von einem Vorzeichenbit des Worts definierten Wert geladen ist, und
   - Erhalten (110) des umcodierten Worts (« 0001s0110 ») durch Verkettung des ersten Unterworts (« 10 ») und des umcodierten zweiten Unterworts (« 0001 s01 »), wobei diese Verkettung durch sequentielles Lesen der Werte der nicht kurzgeschlossenen Zellen der beiden in Reihe geschalteten Zellenschieberegister (10, 12) erhalten wird.

2. Verfahren zur entropischen Umcodierung nach Anspruch 1, bei dem die Anwendung (108) des vorbestimmten entropischen Codes auf das zweite Unterwort (« s00000101 ») folgende Schritte umfasst:

   - wenn das zweite Unterwort nicht aus Bits besteht, die alle identisch sind, Bestimmung der ausgehend von dem niederwertigsten Ende des zweiten Unterworts erkannten Position seines niederwertigsten Bits, das Referenzbit genannt wird und über das hinaus alle höherwertigen Bits des zweiten Unterworts identisch sind,
   - Erhalten des umcodierten zweiten Unterworts (« 0001s01 ») durch Verkettung einer Anzahl an Bits mit einem gleichen vorbestimmten Wert, wobei diese Anzahl der vorbestimmten Position entspricht, eines Bits mit komplementärem Wert mit dem gleichen vorbestimmten Wert, eines in Abhängigkeit des Vorzeichens des Worts definierten Bits und der Bits des zweiten Unterworts, deren Wert geringer ist als der seines Referenzbits.

3. Verfahren zur entropischen Umcodierung nach Anspruch 2, bei dem der entropische Code, wenn das zweite Unterwort aus Bits besteht, die alle identisch sind, ihm ein umcodiertes Wort aus zwei Bits zuordnet, wobei das erste den komplementären Wert und das zweite einen Wert hat, der in Abhängigkeit von dem Vorzeichenbit des Worts definiert ist.

4. Verfahren zur entropischen Umcodierung nach einem der Ansprüche 1 bis 3, das folgende Schritte umfasst:

   - Vorabbestimmung (102) der vorbestimmten Anzahl B an niederwertigsten Bits, die als einen Rauschpegel der Wörter der ersten Binärdatenreihe darstellend betrachtet werden,
   - Bereitstellung (112) der zweiten komprimierten Binärdatenreihe mit dieser Anzahl B.

5. Verfahren zur entropischen Umcodierung nach Anspruch 4, bei dem die vorbestimmte Anzahl B an niederwertigsten Bits, die als einen Rauschpegel der Wörter der ersten Binärdatenreihe darstellend betrachtet werden, als den ganzen Teil des Durchschnitts der Positionen des niederwertigsten Bits der Wörter der ersten Binärdatenreihe darstellend ausgewählt wird, über den hinaus alle höherwertigen Bits einen gleichen vorbestimmten Wert haben.

6. Verfahren zur blockweisen Codierung eines Pixelrasterbildes (24), das aus mehreren getrennten Blöcken besteht, wobei das Verfahren einen Schritt (202, 204) umfasst, bei dem aufeinanderfolgende zweidimensionale Zerlegungen (202, 204) der Blöcke dieses Bildes in einer Basis von diskreten Funktionen (LL1, HL1, LH1, HH1, L2, H2, L3, H3, L4, H4) ausgeführt werden, die mithilfe der kombinierten Anwendung eines eindimensionalen Kerns zur vertikalen Zerlegung von n Pixeln und eines eindimensionalen Kerns zur horizontalen Zerlegung von p Pixeln bestimmt wird, wobei die horizontale Richtung der Blöcke als diejenige der Zeilen des Rasterbildes in einem Modus zum zeilenweisen, sequentiellen Lesen und/oder Übertragen des Rasterbildes definiert ist, bei dem:

- die horizontale Dimension P in der Pixelanzahl jedes Blocks als Vielfaches von p, P = k.p, bestimmt ist und eine Zerlegung mit $\log_p(P)$ Auflösungsebene(n) mithilfe des eindimensionalen Kerns zur horizontalen Zerlegung ausgeführt wird,
- die vertikale Dimension N in der Pixelanzahl jedes Blocks als Vielfaches von n, N = l.n., bestimmt ist und eine Zerlegung mit $\log_n(N)$ Auflösungsebene(n) mithilfe des eindimensionalen Kerns zur vertikalen Zerlegung ausgeführt wird, und
- für gegebene Werte von n und p die Werte von k und l so ausgewählt werden, dass die vertikale Dimension N kleiner ist als die horizontale Dimension P und dass $\log_p(P)$ und $\log_n(N)$ natürliche Zahlen sind,

und bei dem ein Verfahren zur entropischen Umcodierung nach einem der Ansprüche 1 bis 5 auf eine erste Binärdatenreihe angewendet wird, die bei dem Schritt (202, 204) bereitgestellt wird, bei dem aufeinanderfolgende zweidimensionale Zerlegungen der Blöcke des Bildes ausgeführt werden.

7. Vorrichtung zur Bilderfassung, die Mittel (32) zum Lesen von Pixelwerten eines Bildes und Mittel (40) zur blockweisen Codierung dieser Werte aufweist, um eine erste Binärdatenreihe bereitzustellen, die aus Wörtern besteht, die in eine zweite Binärdatenreihe umcodiert werden müssen, die durch Verwendung eines vorbestimmten entropischen Codes mit variabler Länge der codierten Wörter komprimiert wird, um jedes Wort der ersten Binärdatenreihe in ein umcodiertes Wort umzucodieren, **dadurch gekennzeichnet, dass** diese Codierungsmittel (40) zwei Zellenschieberegister (10, 12) aufweisen, die in Reihe geschaltet und mit Mitteln (M1, M2) zum Kurzschließen eines Teils ihrer Zellen verbunden sind, wobei die Zellen des ersten Schieberegisters (10) auf den Wert jedes Worts, das umcodiert werden muss, geladen werden sollen und die Zellen des zweiten Schieberegisters (12) mit Bits mit einem gleichen vorbestimmten Wert, mit einem Bit mit komplementärem Wert, der sich von diesem vorbestimmten Wert unterscheidet, und mit einem Bit mit einem in Abhängigkeit von einem Vorzeichenbit des Worts definierten Wert geladen sind, so dass die Schritte eines Verfahrens zur blockweisen Umcodierung oder Codierung nach einem der Ansprüche 1 bis 6 ausgeführt werden, indem die Werte der nicht kurzgeschlossenen Zellen der beiden in Reihe geschalteten Zellenschieberegister (10, 12) sequentiell gelesen werden.

8. Vorrichtung zur Bilderfassung nach Anspruch 7, die eine bildgebende Schaltung (32) zur Erfassung von Bildern und zur analogen/digitalen Umwandlung dieser erfassten Bilder sowie eine Koprozessorschaltung (38) aufweist, die sich von der bildgebenden Schaltung (32) unterscheidet und für eine digitale Verarbeitung der erfassten Bilder elektrisch mit dieser verbunden ist, bei der die Codierungsmittel (40) in die bildgebende Schaltung (32) integriert sind.

9. Computerprogramm, das von einem Kommunikationsnetz heruntergeladen werden kann und/oder auf einem computerlesbaren Träger gespeichert ist und/oder von einem Prozessor ausgeführt werden kann, **dadurch gekennzeichnet, dass** es Programmcodebefehle zum Ausführen der Schritte eines Verfahrens zur blockweisen Umcodierung oder Codierung nach einem der Ansprüche 1 bis 6 aufweist, wenn das Programm auf einem Computer ausgeführt wird.

# Figure 1

B = 2

| s | 0 | 0 | 0 | 0 | 0 | 1 | 0 | 1 | 1 | 0 |

| s | 0 | 0 | 0 | 0 | 0 | 1 | 0 | 1 | | 1 | 0 |

| 0 | 0 | 0 | 1 | s | 0 | 1 | | 1 | 0 |

| 0 | 0 | 0 | 1 | s | 0 | 1 | 1 | 0 |

| 100 |

| 102 |

| 104 |

| 106 |

| 108 |

| 110 |

| 112 |

## *Figure 2*

## *Figure 3*

## Figure 4

$A = \{a_0, ..., a_{15}\}$

$B = \{b_0, ..., b_{15}\}$

$a_{2i}$    $a_{2i+1}$    $B_i$

$b_{2i}$    $b_{2i+1}$

200

202

HH1    } 8 HH1($B_i$)

LH1    } 8 LH1($B_i$)

HL1    } 8 HL1($B_i$)

LL1    8 LL1($B_i$)

204

L4

H4    H3    H2

} 4 H2(i)

} 2 H3(i)

} 1 H4(0)

} 1 L4(0)

# Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2360915 A